# EUROPEAN PATENT APPLICATION

(11) **EP 2 837 910 A1**
(43) Date of publication of application: **18.02.2015**
(21) Application number: 14178442.1
(22) Date of filing: 24.07.2014
(51) Int. Cl.: G01C 19/66

(54) **A system and method for reducing gas flow bias in an rf-excited ring laser gyro**

(30) Priority: 08.08.2013 US 201313962224
(71) Applicant: Honeywell International Inc., Morristown, NJ 07962-2245 (US)
(72) Inventor: Thorland, Rodney Harold, Morristown, NJ New Jersey 07962-2245 (US); Seiber, Bruce A., Morristown, NJ New Jersey 07962-2245 (US)
(74) Representative: Houghton, Mark Phillip

(57) **Abstract**

A ring laser gyroscope (100) comprising: a ring laser gyroscope block (101) comprising an optical cavity (102) filled with a gain medium, the optical cavity having at least three legs (112-1, 112-2, 112-3) that form an optical path; a radio frequency coupler (107) positioned along the optical path, wherein the radio frequency coupler is configured to transmit radio frequency energy which causes two counter-propagating laser beams to form from the gain medium, the laser beams propagating around the optical cavity through the optical path formed by the at least three legs of the optical cavity; a gas flow bypass (105) configured to connect at least one of the at least three legs to at least one other leg of the at least three legs.

## Description

### BACKGROUND

In ring laser gyroscopes using direct current (DC) excitation, DC is applied between an anode and a cathode to excite a laser gain medium. The DC discharge, or plasma excitation current, causes a gas flow of ionized gas between the anode and cathode. This gas flow tends to induce bias error in the RLG measurements. Therefore, typically, the DC excited RLGs are configured with a balanced, symmetrical electrode structure so as to reduce gas flow and the resulting bias errors.

### SUMMARY

In one embodiment, a radio-frequency excited ring laser gyroscope with a gas flow bypass is provided. The radio-frequency excited ring laser gyroscope comprises a ring laser gyroscope block with an optical cavity filled with a gain medium, the optical cavity having at least three legs that form an optical path. A radio frequency coupler is positioned along the optical path, wherein the radio frequency coupler is configured to transmit radio frequency energy which causes two counter-propagating laser beams to form from the gain medium, the laser beams propagating around the optical cavity through the optical path formed by the at least three legs of the optical cavity. A gas flow bypass is configured to connect at least one of the at least three legs to at least one other leg of the at least three legs.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 illustrates one embodiment of an exemplary ring laser gyroscope having a gas flow bypass;
Figure 2 illustrates an exemplary cross sectional view of one embodiment of the ring laser gyroscope of figure 1;
Figure 3 illustrates an alternative embodiment of an exemplary ring laser gyroscope gas flow bypass and corresponding gas flow;
Figure 4 illustrates another exemplary cross sectional view of an embodiment of the ring laser gyroscope of figure 3;
Figure 5 is a block diagram of a method of manufacture for an exemplary radio frequency excited ring laser gyroscope with gas flow bypass;
Figure 6 is a system block diagram illustrating an exemplary system for a ring laser gyroscope having a gas flow bypass.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

In radio frequency (RF) excited RLGs, no DC discharge is present to cause a gas flow between cathode(s) and anode(s). Although no DC discharge is present in an RF excited RLG to cause gas flow, it has been discovered that gas flow effects still exist within RF excited RLGs. Gas flow within RF excited RLGs can be caused by thermal gradients within the optical cavity. The embodiments described herein reduce the sensitivity of the RLG to thermal gas flow bias errors by providing one or more gas flow paths within the optical cavity that bypass the optical path. Addition of these bypass paths allows the necessary pressure equalizations within the cavity to occur while reducing the bias errors that result from gas flow along the optical path.

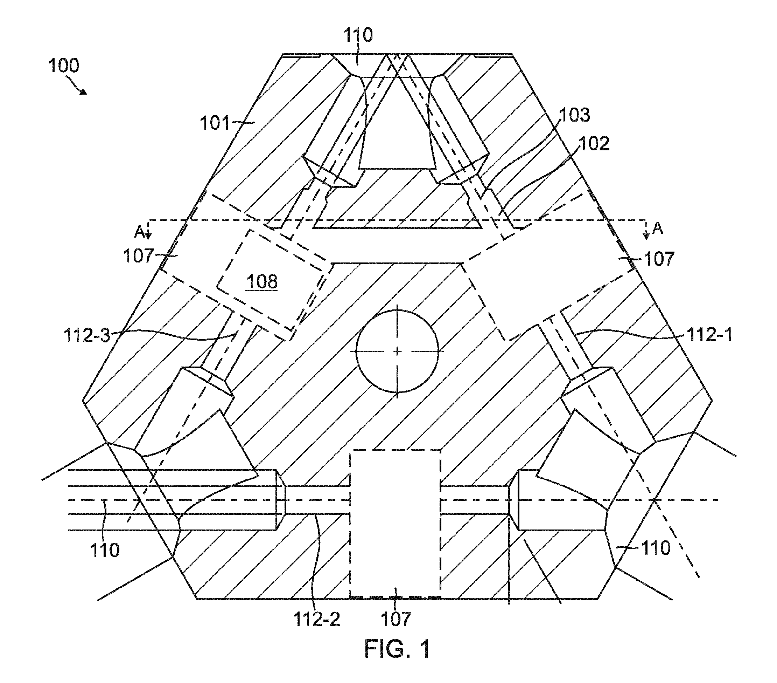

Figure 1 illustrates a plan view of one embodiment of an exemplary ring laser gyroscope 100. Ring laser gyroscope includes a gyroscope block 101 comprising an optical cavity 102. The optical cavity 102 includes optical path 103 with three legs 112-1, 112-2, and 112-3. Although three legs are shown in this example, it is to be understood that an optical cavity having more than three legs can be used in other embodiments. Optical cavity 102 comprises optical bores that are created in the ring laser gyroscope block 101 to form the optical cavity 102. The optical cavity 102 is filled with a gain medium. The gain medium can be any gain medium suitable for use as a gain medium in a RLG as known to those having ordinary skill in the art.

Gas flow bypass 105 connects two legs 112-1 and 112-3 of the optical path 103. The gas flow bypass is a bore in the ring laser gyro block 101 similar to the optical bores that form optical cavity 102. In one embodiment, the gas flow bypass 105 is a direct bore between legs 112-1 and 112-3 of the optical path 103. In another embodiment, the gas flow bypass 105 is a bore that is located on a different plane from the plane of optical path 103. In other embodiments, other configurations of the gas flow bypass 105 may be used. The gas flow bypass is configured to allow as much of the gain medium gas to flow through it as possible without interfering with RLG functionality. Thus, generally it is beneficial to have a bore as large as permitted by the RLG block 101, and other size constraints which may have an impact on RLG functionality. In one embodiment, the diameter of the gas flow bypass is larger than that of the optical bore of legs 112-1 and 112-3. In other embodiments, the diameter of the gas flow bypass can be smaller, or the same size as that of the optical bore of legs 112-1 and 112-3. However, when a larger bore is used, a larger volume of gas flow will occur. In one embodiment, chambers 108 are found at approximately the same location along the optical cavity 102 as RF couplers 107, with RF couplers 107 blocking the view of the chambers 108 in the background. One of these chambers 108 is visible in figure 1 for illustration purposes. These chambers 108 provide a reservoir of additional gain medium, which can protect against leaks in the RLG seals by delaying the effects of the of the leaking process on RLG performance. Legs 112-1 and 112-3 narrow significantly toward the top of the RLG as they approach the mirror 110. This is referred to as the aperture. In addition to serving an optical purpose, gas flows with increased speed in the aperture relative to the larger optical bore.

In one embodiment, radio frequency couplers 107 are positioned on each of the legs of the optical path 103. In other embodiments, only one RF coupler is placed on one leg of an optical path, or other arrangement of RF couplers may be used to excite a gain medium in an optical cavity. In some embodiments, the radio frequency couplers 107 are capacitive plates on either side of the excitation bores of the optical path 103. In other embodiments, the radio frequency couplers 107 are inductive coils wound around the optical bores of optical path 103. In other embodiments, more than one set of capacitive plates, more than one set of inductive coils, or any combination thereof may be used. Radio frequency couplers 107 are configured to couple RF energy to excite the gain medium, and produce two, counter-propagating laser beams within optical cavity 102 and along optical path 103. Counter-propagating laser beams in the sense that a first laser beam is generated going in one direction around the optical path 103, and a second laser beam propagates the opposite direction around the optical path 103.

The RLG environment can cause temperature gradients to occur within the optical cavity. These temperature gradients cause the gain medium to flow. This is referred to as thermal gas flow. This gas flow can induce bias errors. In one embodiment, such as an RLG using capacitive plates as RF couplers 107, the gas flow is a transverse capacitive discharge driven gas flow. Gas flow bypass 105 bypasses the optical path 103 and provides a gas flow path through which the thermal gas flow can travel. Since the gas flow bypasses the optical path 103 rather than flowing within the optical path 103, the bias errors induced by gas flow are reduced.

Minors 110 are positioned at the each of the three corners of the optical path 103. One of the mirrors 110 can be configured as a readout mirror from which RLG measurements may be read.

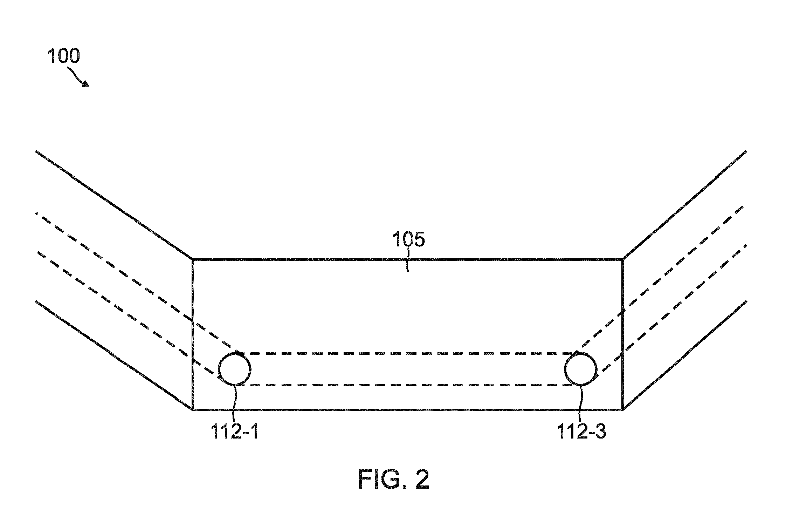

Figure 2 illustrates an exemplary cross-sectional view of the above described ring laser gyroscope 100 taken along the line A-A. For purposes of illustration, the RF couplers 107 have been omitted from Figure 2. Referring to both Figures 1 and 2, legs 112-1 and 112-3 of optical path 103 are pneumatically connected by gas flow bypass 105. It is to be understood that Figure 2 depicts an exemplary embodiment presented by way of example and not by way of limitation. In particular, other configurations of the gas flow bypass 105 may be used in other embodiments to effectively act as a gas flow bypass. In one embodiment, the gas flow bypass 105 can be placed above the plane of optical path 103. In another embodiment, the gas flow bypass can pneumatically connect legs 112-1 to 112-2, and have a second pneumatic connection from 112-2 to 112-3. In other embodiments with optical paths with more than three legs, the gas flow bypass can be configured to pneumatically connect at least two of the legs.

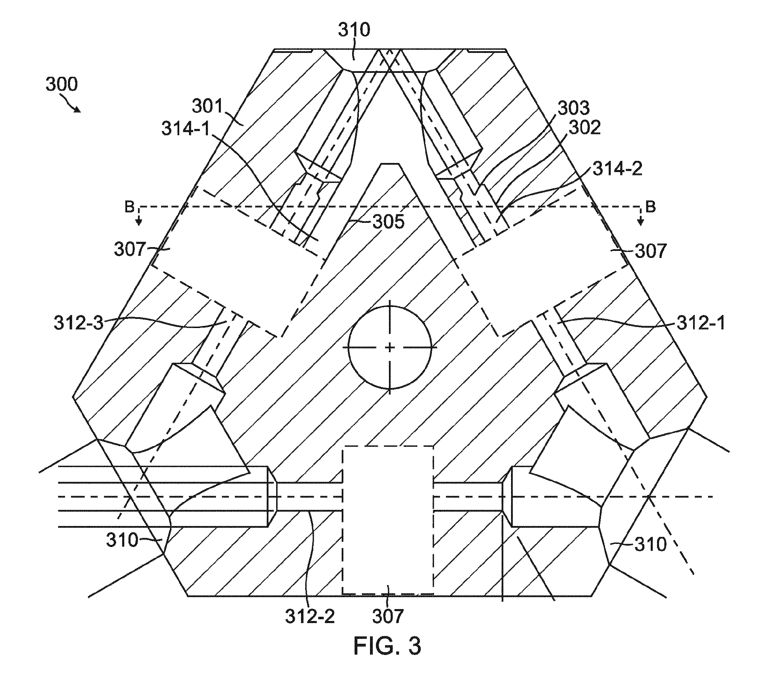

Figure 3 illustrates an alternative embodiment of a ring laser gyroscope 300. Like RLG 100 above, RLG 300 includes gyroscope block 301 comprising an optical cavity 302. Optical cavity 302 includes optical path 303 with three legs 312-1, 312-2, and 312-3. Optical cavity 302 is comprised of three optical bores that are created within the ring laser gyroscope block 301. The optical cavity 302 is filled with a gain medium.

In the example shown in Figure 3, the way the gas flow bypass 305 is implemented is different than the example shown in Figure 1. In particular, as shown in Figure 3, gas flow bypass 305 has two legs 314-1 and 314-2. The legs 314-1 and 314-2 of the gas flow bypass 305 connect two of the three legs (i.e. legs 312-1 and 312-3) of the optical path 303 together at an angle, as opposed to a straight bore between the legs 312-1 and 312-3. In another embodiment, the legs 314-1 and 314-2 can be configured to be in a different plane than the plane of the optical cavity 302. In another embodiment, chambers lie along the path of legs 312-1, 312-2, and 312-3, acting as a reservoir holding additional gain medium. Legs 314-1 and 314-2 of gas flow bypass 305 connect legs 312-1 and 312-3 by pneumatically connecting to the chambers found along 312-1 and 312-3. In one embodiment, chambers are found at approximately the same location along the optical cavity 302 as RF couplers 307, with RF couplers 307 blocking the view of the chambers in the background. Thus, one having ordinary skill in the art can appreciate that different configurations of the gas bypass bore may be used to relieve gas flow pressure imbalances.

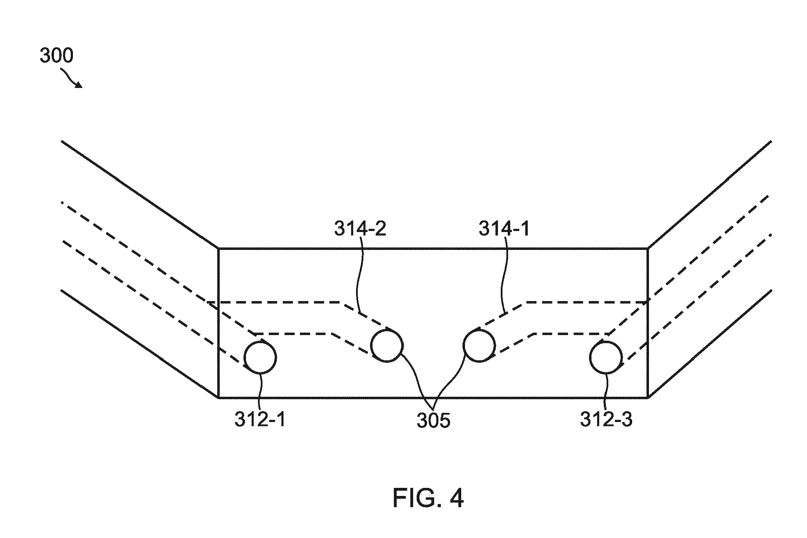

Figure 4 illustrates an exemplary cross-sectional view of the above described ring laser gyroscope 300 taken along the line B-B. For purposes of illustration, the RF couplers 307 have been omitted from Figure 4. Referring to both Figures 3 and 4, legs 312-1 and 312-3 of optical path 303 are pneumatically connected by gas flow bypass 305, having two legs 314-1 and 314-2. It is to be understood that Figure 2 depicts an exemplary embodiment presented by way of example and not by way of limitation. For example, in another embodiment, a gas flow bypass is configured to connect leg 312-1 of the optical path at a chambers found along the leg, to another chamber along leg 312-3. In another embodiment, the gas flow bypass 305 and the legs 312 are located on a different plane.

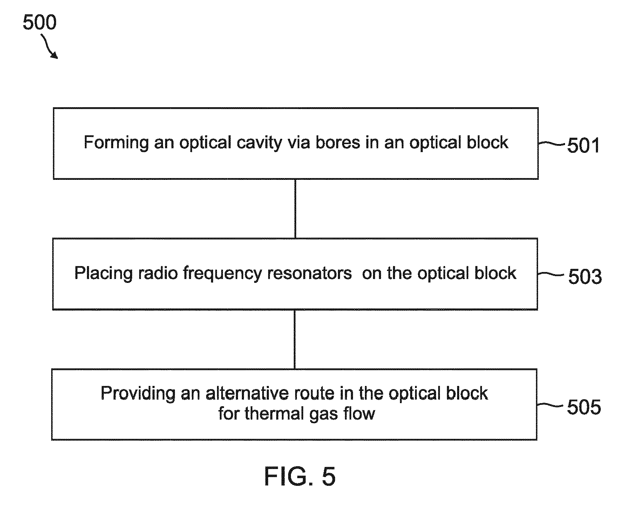

Figure 5 illustrates a flow chart of an example method 500 of manufacturing a ring laser gyroscope. At block 501, an optical cavity comprising at least three legs is formed via bores in an optical block. At block 503, RF couplers are placed on the optical block. In one embodiment, the RF couplers are placed outside of the optical block, positioned along the optical bores. In another embodiment, an inductive RF coupler is wrapped around one of the optical bores around the outside of the optical block. In an alternative embodiment, RF couplers could be placed or formed within the optical block. Positions where the RF couplers are configured to couple RF energy into the optical bore are referred to as discharge bores. The RF couplers are configured to excite a gain medium located in the optical cavity of the ring laser gyroscope. In some embodiments, each RF coupler includes capacitive plates on either side of a respective bore of the optical path. In other embodiments, the RF couplers include inductive coils wound around respective bores of optical path. In yet other embodiments, more than one set of capacitive plates, more than one set of inductive coils, or any combination thereof may be used.

At block 505, an alternate route for thermal gas flow is provided in the optical block. The alternate route allows the thermal gas flow to pass from at least one bore of an optical cavity to at least one other bore of the same optical cavity, each bore also comprising a different leg of the optical path. Thus, when a gain medium in the optical cavity is excited, the excited gain medium produces two counter-rotating laser beams within the optical cavity of the RLG. Thermal gradients within the RLG caused by the RF couplers and other components of the RLG cause thermal gas flow. The thermal gas flow passes through the alternate route which reduces the effects of the thermal gas flow.

It is to be understood that Figure 5 depicts an exemplary embodiment and that it is not necessary to perform the method in the order in which the blocks are presented. Therefore, Figure 5 and the above description is not to be taken in a limiting sense.

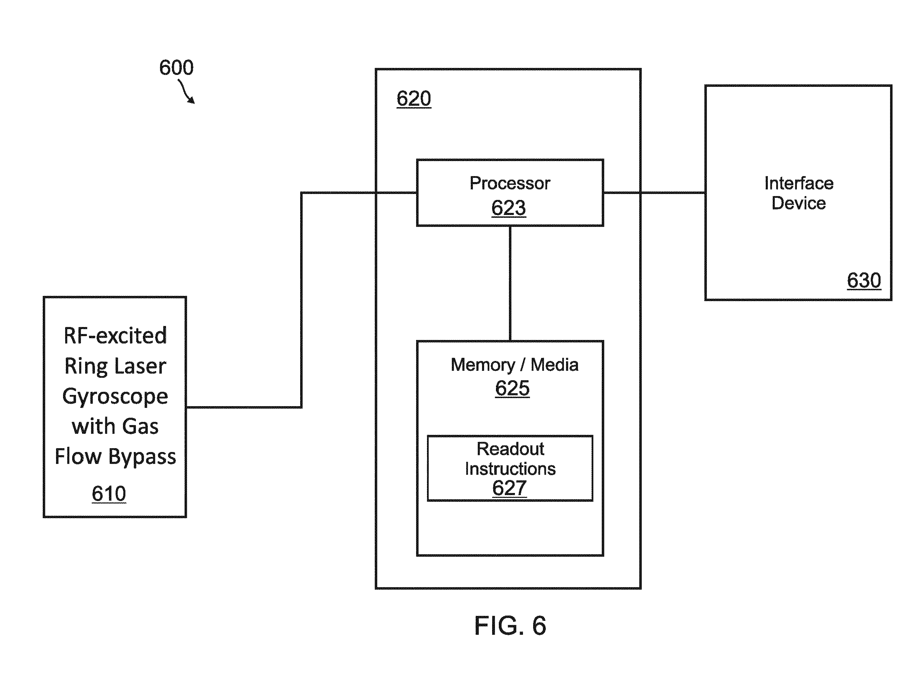

Figure 6 is a system block diagram illustrating an exemplary system 600 for a ring laser gyroscope having a gas flow bypass. In one embodiment, RF-excited Ring Laser Gyroscope with Gas Flow Bypass 610 is coupled to measurement unit 620. Measurement unit 620 comprises a processor 623 coupled to computer readable memory/media 625, containing readout instructions 627. The processor 623 is coupled to interface device 630. Suitable computer readable memory includes any available media that can be accessed by a general purpose or special purpose computer or processor, or any programmable logic device. For example, suitable processor-readable media may include storage or memory media such as, but not limited to, conventional hard disks, Compact Disk - Read Only Memory (CD-ROM), volatile or nonvolatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc.

In one embodiment, the RF-excited RLG with gas flow bypass 610 includes a gyroscope block comprising an optical cavity. The optical cavity includes an optical path with at least three legs. The optical cavity comprises optical bores that are created in the ring laser gyroscope block to form the optical cavity. The optical cavity is filled with a gain medium.

The RF-excited RLG with gas flow bypass 610 also includes a gas flow bypass that connects at least two legs of the optical path. The gas flow bypass is a bore in the ring laser gyro block similar to the optical bores, as described above with respect to Figures 1-4. The gas flow bypass provides an alternative route to the optical path for thermal gas flow.

At the end of each leg of the optical path, mirrors are configured to keep a laser beam propagating around the optical path as described above. One of the mirrors is a readout mirror configured to be able to take measurements of the counter-propagating laser beams and produce an RLG signal which is output to the measurement unit 620.

In one embodiment, measurement unit 620 comprises processor 623 coupled to system memory and/or media 625, which includes readout instructions 627 configured to cause processor 623 to read an RLG signal from RLG 610, and calculate a rotational movement of the RLG 610. In some embodiments, this might be a calculation of the attitude of the RLG 610, or other calculations made in an inertial reference system.

Processor 623 is coupled to interface device 630. The processor is configured to cause the interface device 630 to visually, aurally, or otherwise indicate a result indicative of the RLG signal. In one embodiment, interface device 630 is a display that is capable of displaying graphical content. Suitable exemplary displays include, but are not limited to, a display associated with an aircraft inertial navigation system. Suitable technologies for implementing the display include, but are not limited to, a cathode ray tube (CRT) display, an active matrix liquid crystal display (LCD), a passive matrix LCD, a light emitting diode display (LED), or plasma display unit. In other embodiments, the interface device 630 is a speaker capable of aurally indicating a calculation of the processor, such as the attitude of RLG 610 or rotational movement of the RLG 610.

Although specific embodiments have been illustrated and described herein, it will be appreciated by those of ordinary skill in the art that any arrangement, which can achieve the same purpose, may be substituted for the specific embodiments shown. Therefore, it is manifestly intended that this invention be limited only by the claims and the equivalents thereof.

### EXAMPLE EMBODIMENTS

Example 1 includes a ring laser gyroscope comprising: a ring laser gyroscope block comprising an optical cavity filled with a gain medium, the optical cavity having at least three legs that form an optical path; a radio frequency coupler positioned along the optical path, wherein the radio frequency coupler is configured to transmit radio frequency energy which causes two counter-propagating laser beams to form from the gain medium, the laser beams propagating around the optical cavity through the optical path formed by the at least three legs of the optical cavity; a gas flow bypass configured to connect at least one of the at least three legs to at least one other leg of the at least three legs.

Example 2 includes the ring laser gyroscope of example 1, wherein the radio frequency coupler is a set of capacitive plates embedded within the ring laser gyroscope block, wherein the capacitive plates are positioned such that a portion of the optical path is positioned between the capacitive plates.

Example 3 includes the ring laser gyroscope of example 1, wherein the radio frequency coupler is an inductive coil, wherein the inductive coil wraps around a leg of the optical cavity.

Example 4 includes the ring laser gyroscope of example 1, wherein the radio frequency coupler comprises at least one set of capacitive plates and at least one inductive coil.

Example 5 includes the ring laser gyroscope of any of examples 1-4, wherein the gas flow bypass is located in a plane that is different from a plane in which the at least three legs of the optical path are located, wherein the gas flow bypass is pneumatically connected to the optical cavity.

Example 6 includes the ring laser gyroscope of any of examples 1-5, wherein the gas flow bypass is connected to the optical cavity via a chamber, wherein the chamber provides a reservoir of additional gain medium to the optical cavity.

Example 7 includes the ring laser gyroscope of any of examples 1-4, and 6, wherein the gas flow bypass comprises a single bore between two of the three legs of the optical path.

Example 8 includes the ring laser gyroscope of any of examples 1-6, wherein the gas flow bypass comprises more than one leg.

Example 9 includes the ring laser gyroscope of any of examples 1-8, wherein the gas flow bypass is configured to connect a first leg of the optical path at a first position where a first radio frequency coupler is placed to a second leg of the optical path at a second position where a second radio frequency coupler is placed, such that bias error induced by thermal gas flow is reduced.

Example 10 includes a method for manufacturing a radio frequency excited ring laser gyroscope with gas flow bypass comprising: forming an optical cavity in an optical block, wherein the optical cavity comprises bores within the optical block, the optical cavity having at least three legs that form an optical path; placing radio frequency couplers configured to transmit RF energy into the optical cavity; providing a gas flow bypass, wherein the gas flow bypass is an alternative route to the optical path in the optical block for a thermal gas flow.

Example 11 includes the method of example 10, wherein the thermal gas flow is a transverse capacitive discharge driven gas flow caused by the radio frequency coupler.

Example 12 includes the method of any of examples 10-11, wherein the radio frequency coupler is a set of capacitive plates placed outside of the ring laser gyroscope block, wherein the capacitive plates are positioned such that a portion of the optical path is positioned between the capacitive plates.

Example 13 includes the method of example 10, wherein the radio frequency coupler is an inductive coil, wherein the inductive coil wraps around a leg of the optical cavity.

Example 14 includes the method of any of examples 10-11, wherein the radio frequency coupler comprises at least one set of capacitive plates, inductive coil, or any combination thereof.

Example 15 includes the method of any of examples 10-14, wherein the gas flow bypass is located in a plane different from a plane created by the optical path, wherein the gas flow bypass is pneumatically connected to the optical cavity.

Example 16 includes the method of any of examples 10-14, wherein the gas flow bypass is connected to the optical cavity via a chamber, wherein the chamber provides a reservoir of additional gain medium to the optical cavity.

Example 17 includes the method of claim 10, wherein the optical path comprises at least three legs, wherein the gas flow bypass comprises one direct bore between two of the at least three legs of the optical path.

Example 18 includes the method of example 10-17 wherein the gas flow bypass comprises more than one leg.

Example 19 includes a system for a radio frequency excited ring laser gyroscope with gas flow bypass comprising: a radio frequency excited ring laser gyroscope with gas flow bypass comprising: a ring laser gyroscope block comprising an optical cavity filled with a gain medium, the optical cavity having at least three legs that form an optical path; a radio frequency coupler positioned along the optical path, wherein the radio frequency coupler is configured to transmit radio frequency energy which causes two counter-propagating laser beams to form from the gain medium, the laser beams propagating around the optical cavity through the optical path formed by the at least three legs of the optical cavity; a gas flow bypass configured to connect at least one of the at least three legs to at least one other leg of the at least three legs; a measurement unit coupled to the radio frequency excited ring laser gyroscope with gas flow bypass, the measurement unit configured to read a signal from the radio frequency excited ring laser gyroscope with gas flow bypass indicative of rotational movement; and an interface device coupled to the measurement unit configured to indicate a result indicative of the signal from the radio frequency excited ring laser gyroscope with gas flow bypass.

Example 20 includes the system of example 19, wherein the gas flow bypass is connected to the optical cavity via a chamber, wherein the chamber provides a reservoir of additional gain medium to the optical cavity.

## Claims

1. A ring laser gyroscope (100) comprising:
a ring laser gyroscope block (101) comprising an optical cavity (102) filled with a gain medium, the optical cavity having at least three legs(112-1, 112-2, 112-3) that form an optical path;
a radio frequency coupler (107) positioned along the optical path, wherein the radio frequency coupler is configured to transmit radio frequency energy which causes two counter-propagating laser beams to form from the gain medium, the laser beams propagating around the optical cavity through the optical path formed by the at least three legs of the optical cavity;
a gas flow bypass (105) configured to connect at least one of the at least three legs to at least one other leg of the at least three legs.

2. The ring laser gyroscope (100) of claim 1, wherein the radio frequency coupler (107) is a set of capacitive plates embedded within the ring laser gyroscope block, wherein the capacitive plates are positioned such that a portion of the optical path is positioned between the capacitive plates.

3. The ring laser gyroscope (100) of claim 1, wherein the radio frequency coupler (107) is an inductive coil, wherein the inductive coil wraps around a leg of the optical cavity.

4. The ring laser gyroscope (100) of claim 1, wherein the gas flow bypass (105) is located in a plane that is different from a plane in which the at least three legs of the optical path are located, wherein the gas flow bypass is pneumatically connected to the optical cavity.

5. The ring laser gyroscope (100) of claim 1, wherein the gas flow bypass (105) is connected to the optical cavity via a chamber (108), wherein the chamber (108) provides a reservoir of additional gain medium to the optical cavity.

6. The ring laser gyroscope (100) of claim 1, wherein the gas flow bypass (105) is configured to connect a first leg of the optical path at a first position where a first radio frequency coupler is placed to a second leg of the optical path at a second position where a second radio frequency coupler is placed, such that bias error induced by thermal gas flow is reduced.

7. A method (500) for manufacturing a radio frequency excited ring laser gyroscope with gas flow bypass comprising:
forming an optical cavity in an optical block, wherein the optical cavity comprises bores within the optical block, the optical cavity having at least three legs that form an optical path (502);
placing radio frequency couplers configured to transmit RF energy into the optical cavity (504); and
providing a gas flow bypass, wherein the gas flow bypass is an alternative route to the optical path in the optical block for a thermal gas flow (506).

8. The method (500) of claim 7, wherein the thermal gas flow is a transverse capacitive discharge driven gas flow caused by the radio frequency coupler.

9. The method (500) of claim 7, wherein the gas flow bypass is located in a plane different from a plane created by the optical path, wherein the gas flow bypass is pneumatically connected to the optical cavity.

10. The method (500) of claim 7, wherein the gas flow bypass is connected to the optical cavity via a chamber, wherein the chamber provides a reservoir of additional gain medium to the optical cavity.
